**Europäisches Patentamt**

(19) **European Patent Office**

**Office européen des brevets**

(11) Numéro de publication: **0 006 075**
**B1**

(12) **FASCICULE DE BREVET EUROPEEN**

(45) Date de publication du fascicule du brevet: **21.04.82**

(51) Int. Cl.³: **G 02 C 5/22**

(21) Numéro de dépôt: **79810042.6**

(22) Date de dépôt: **25.05.79**

(54) Charnière de lunettes.

(30) Priorité: **30.05.78 CH 5872/78**

(43) Date de publication de la demande:
**12.12.79 Bulletin 79/25**

(45) Mention de la délivrance du brevet:
**21.04.82 Bulletin 82/16**

(84) Etats contractants désignés:
**AT DE FR IT**

(56) Documents cités:
**FR - A - 2 246 883**
**FR - A - 2 334 808**

(73) Titulaire: **LA NATIONALE S.A.**
**2 Rue des Falaises**
**CH-1211 Geneve 8 (CH)**

(72) Inventeur: **Beyer, Karl**
**49, Avenue de Vaudagne**
**CH - 1217 Meyrin-Genève (CH)**
Inventeur: **Zellweger, Conrad**
**7, chemin des Voirons**
**CH-1224 Chene-Bougeries-Genève (CH)**

(74) Mandataire: **Ardin, Pierre et al,**
**PIERRE ARDIN & CIE 22, rue du Mont-Blanc**
**CH-1211 Geneve 1 (CH)**

Courier Press, Leamington Spa, England.

Charnière de lunettes

On connaît des charnières de lunettes comprenant deux parties articulées l'une à l'autre et dont l'une présente un profil de came, l'autre présentant un logement cylindrique borgne dans lequel sont disposés un ressort et une bille formant poussoir, le ressort sollicitant la bille contre le profil de came (voir par exemple la demande de brevet français no 2.246.883).

Un inconvénient de ces charnières est que la bille ne tourne pas dans son logement, bloquée par le ressort, de sorte qu'elle glisse le long du profil de came, causant une usure rapide de ce dernier.

Le but de l'invention est de remédier à cet inconvénient. A cet effet, la charnière faisant l'objet de l'invention est caractérisée en ce qu'une pièce intermédiaire est disposée dans le logement, entre le ressort et la bille, cette pièce intermédiaire donnant lieu à des frottements avec la bille inférieurs aux frottements de cette bille sur le profile de came.

Le dessin annexé représente, schématiquement et à titre d'exemple, deux formes d'exécution d'une charnière, objet de l'invention.

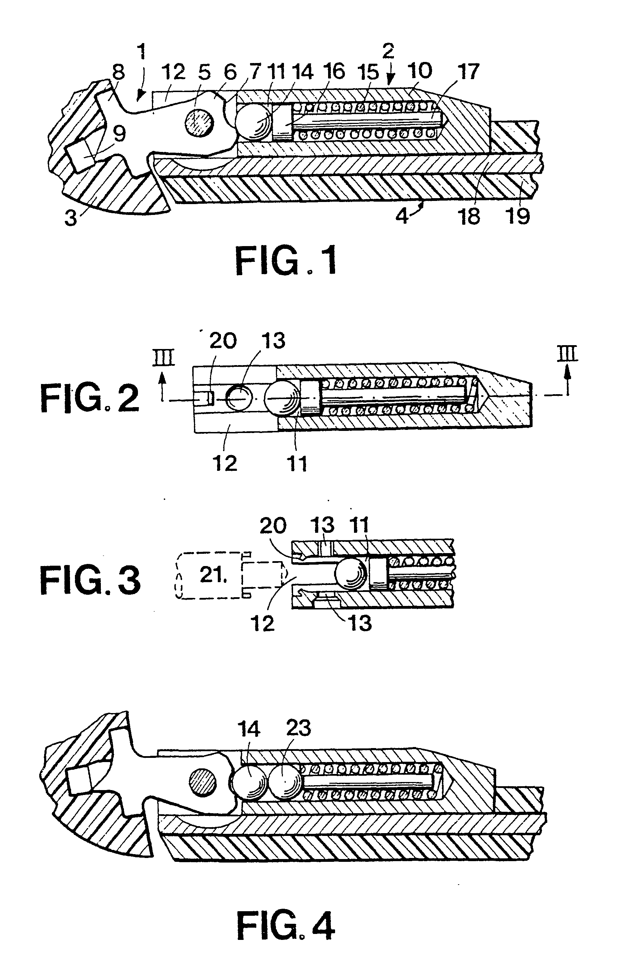

La figure 1 est une vue d'une charnière en coupe partielle, selon un plan perpendiculaire à son axe d'articulation; la figure 2 est une vue en coupe longitudinale d'une partie de charnière; la figure 3 est une vue en coupe selon III—III de la figure 2; la figure 4 est une vue d'une seconde forme d'exécution en coupe partielle, selon un plan perpendiculaire à son axe d'articulation.

La charnière représentée à la figure 1 comprend deux parties 1 et 2 articulées l'une à l'autre par une vis 5 et respectivement fixées à la monture 3 d'une paire de lunettes et à une branche 4.

La première partie 1 comprend une portion 6, présentant un profil de came 7, et des moyens d'ancrage constitués par deux croisillons 8 et 9 sensiblement orthogonaux, noyés dans la monture 3.

La partie 1 est constituée par une tôle découpée de façon à présenter deux croisillons 8 et 9 parallèles espacés. Cette tôle est tordue entre les deux croisillons 8 et 9 de sensiblement un quart de tour pour que ceux-ci soient sensiblement orthogonaux.

La partie 2 est constituée par une pièce allongée 10 présentant un logement cylindrique borgne 11 et une fente 12 à l'extrémité ouverte dudit logement 11. Cette fente est destinée à recevoir la portion 6 de la partie 1 avec le profil de came 7, et comme le montre la figure 3, un perçage taraudé 13, prévu perpendiculairement au plan de la fente 12, est destiné à recevoir la vis 5 d'articulation des parties 1 et 2.

Le logement 11 contient une bille 14, un ressort 15, une pièce intermédiaire 16 et une tige de butée 17. Le ressort 15 prend appui contre le fond du logement 11 et solicite la bille 14 par l'intermédiaire de la pièce 16 contre le profil de came 7. La matière employée pour cette pièce intermédiaire 16 est telle que les frottements de la bille 14 sur la pièce intermédiaire 16 sont inférieurs aux frottements de la bille 14 sur le profil de came 7. Cette pièce intermédiaire 16 peut être, par exemple, en téflon ou en un métal plus dur que celui constituant la première partie de charnière 1. La pièce intermédiaire 16, de forme cylindrique, est venue d'une pièce avec la tige 17 et coulisse dans le logement 11. La tige de butée 17 est disposée à l'intérieur du ressort 15 et s'oppose au déplacement de la bille 14 et de la pièce intermédiaire 16 en fin de course, en direction du fond du logement, de façon à limiter l'ouverture de la charnière. La partie 2 est rendue solidaire de l'armature métallique 18 de la branche 4, cette armature 18 étant ensuite enrobée dans une matière plastique 19. L'armature 18 recouvre la fente 12 cachant ainsi le profil de came 7 lorsque la branche 4 est vue depuis le côté extérieur de la paire de lunettes.

Comme le montrent les figures 2 et 3, la partie 2 est munie de moyens de retenue du contenu du logement 11. Ces moyens de retenue sont constitués par une bavure 20, formée par exemple au moyen d'un outil 21, après la mise en place du ressort 15, de la tige 17 avec la pièce intermédiaire 16 et de la bille 14 dans le logement 11, cette bavure 20 diminuant la section libre du logement 11 à proximité de son ouverture.

On peut prévoir de nombreuses variantes de la charnière faisant l'objet de l'invention. La bavure de retenue pourrait être remplacée par tout moyen diminuant la section libre du logement 11 à proximité de son ouverture, par exemple par une vis transversale ou par un rebord formé à son extrémité ouverte. La pièce intermédiaire pourrait être en forme de demi-sphère se prolongeant ou non par la tige de butée 17.

La figure 4 montre une variante dans laquelle cette pièce intermédiaire est constituée par une bille 23 identique à la bille 14, ce qui permet de réduire le nombre de pièces différentes dans cette charnière et donc de réduire le prix de revient.

La charnière décrite ci-dessus est très avantageuse, car elle permet au fabricant de fournir à un usager, notamment à un opticien, des branches de lunettes séparées contenant tous les organes nécessaires à son fonctionnement, sans que ceux-ci puissent se perdre. En outre, les frottements de la bille 14 sur la pièce intermédiaire 16, 23 étant inférieurs aux frottements de la bille 14 sur le profil de came 7, la bille 14 roule contre le profil de came 7 évitant ainsi une usure excessive de ce dernier. De plus, le prix de revient de la partie de charnière fixée à la monture de la paire de lunettes est inférieur à celui des parties correspondantes connues, car elle est fabriquée par découpage et torsion.

**Revendications**

1. Charnière de lunettes comprenant deux parties (1, 2) articulées l'une à l'autre et dont l'une présente un profil de came (7), l'autre présentant un logement cylindrique borgne (11) dans lequel sont disposés au moins un ressort (15) et une bille (14) formant poussoir, le ressort (15) sollicitant la bille (14) contre le profil de came, caractérisée en ce qu'une pièce intermédiaire (16/23) est disposée dans le logement (11) entre le ressort (15) et la bille (14), cette pièce intermédiaire (16, 23) donnant lieu à des frottements avec la bille (14) inférieure aux frottements de cette bille sur le profil de came.

2. Charnière selon la revendication 1, dans laquelle le logement cylindrique (11) présente des moyens (20) de retenue de son contenu, ces moyens (20) diminuant la section libre dudit logement (11) à proximité de son ouverture, caractérisée en ce que lesdits moyens de retenue sont constitués par une bavure formée dans la face interne du logement.

3. Charnière selon la revendication 1 ou 2, caractérisée en ce que la pièce intermédiaire (16) comprend une partie de forme cylindrique coulissant dans le logement (11).

4. Charnière selon la revendication 1 ou 2, caractérisée en ce que la pièce intermédiaire est constituée par une autre bille (23).

**Patentansprüche**

1. Brillenscharnier, bestehend aus zwei aneinander gegliederten Teilen (1, 2), von denen der eine ein Nockenprofil (7) aufweist und der andere ein einseitig geöffnetes zylindrisches Gehäuse (11) besitzt, in welchem zu mindest eine Feder (15) und eine Kugel (14) angeordnet sind, wobei die Feder (15) die Kugel (14) gegen das Nockenprofil drückt, *dadurch gekennzeichnet,* dass ein Zwischenstück (16/23) zwischen der Feder (15) und der Kugel (14) im Gehäuse (11) angeordnet ist, wobei dieses Zwischenstück (16, 23) mit der Kugel (14) weniger Reibung verursacht als die Reibung zwischen dieser Kugel und dem Nockenprofil.

2. Scharnier nach Anspruch 1, in welchem das zylindrische Gehäuse (11) Mittel (20) zum Zurückhalten seines Innhaltes aufweist, wobei diese Mittel (20) den inneren Querschnitt des Gehäuses (11) nahe bei seiner Offnung verkleinern, *dadurch gekennzeichnet,* dass diese Mittel zum Zurückhalten aus einer auf der Innenwand des Gehäuses angefertigten Rippe bestehen.

3. Scharnier nach Anspruch 1 oder 2 *dadurch gekennzeichnet,* dass das Zwischenstück (16) einem im Gehäuse (11) gleitenden Teil von zylindrischer Form aufweist.

4. Scharnier nach Anspruch 1 oder 2 *dadurch gekennzeichnet,* dass das Zwischenstück aus einer andern Kugel (23) besteht.

**Claims**

1. A hinge for spectacles comprising two parts (1, 2) connected to each other, one of said parts presents a cam contour (7), the other of said parts comprising a blind cylindrical housing (11) in which are located at least one spring (15) and one ball (14) forming a pressure member, the spring (15) pushing the ball (14) against the cam contour (7), characterized in that an intermediate part (16/23) is located in the housing (11) between the spring (15) and the ball (14), said intermediate part (16, 23) providing less friction with the ball (14) than the friction of said ball (14) on the cam contour (7).

2. A hinge according to claim 1, in which the cylindrical housing (11) comprises means (20) for retaining its contents, said retaining means (20) reducing the open cross section of said housing (11) near its opening, characterized in that said retaining means (20) are constituted by fins (20) formed on the internal surface of the housing (11).

3. A hinge according to claim 1 or 2, characterized in that the intermediate part (16) comprises a cylindrical-shaped member sliding in the housing (11).

4. A hinge according to claim 1 or 2, characterized in that the intermediate part is constituted by another ball (23).

FIG . 1

FIG . 2

FIG . 3

FIG . 4